# FASCICULE DE BREVET EUROPEEN

(11) **EP 3 996 941 B1**
(45) Date de publication et mention de la délivrance du brevet: **27.12.2023**
(21) Numéro de dépôt: 20750320.2
(22) Date de dépôt: 07.07.2020
(51) Int. Cl.: B60C 1/00, B60C 5/14, B60C 9/18, B60C 9/20, B60C 11/00, B60C 19/08, B60C 15/06

(54) **PNEUMATIQUE POUR VEHICULE DU GENIE CIVIL A FAIBLE EMPREINTE ENVIRONNEMENTALE**
BAUSTELLENFAHRZEUGREIFEN MIT GERINGER UMWELTBELASTUNG
CONSTRUCTION PLANT VEHICLE TYRE WITH LOW ENVIRONMENTAL FOOTPRINT

(30) Priorité: 11.07.2019 FR 1907777
(43) Date de publication de la demande: 18.05.2022
(73) Titulaire: COMPAGNIE GENERALE DES ETABLISSEMENTS MICHELIN, 63000 Clermont-Ferrand (FR)
(72) Inventeur: ROYER, Thierry, 63040 CLERMONT-FERRAND Cedex 9 (FR); LAGARDE, Patricia, 63040 CLERMONT-FERRAND Cedex 9 (FR)
(74) Mandataire: M.F.P. Michelin
(86) Numéro de dépôt international: PCT/FR2020/051201
(87) Numéro de publication internationale: WO 2021/005301

(56) Documents cités:
- EP-A1- 3 238 958
- WO-A1-2018/134488
- WO-A1-2018/202968
- WO-A1-2019/122618
- FR-A1- 3 022 838
- JP-A- 2000 025 413

## Description

La présente invention concerne un pneumatique radial, destiné à équiper un véhicule lourd de type génie civil, plus particulièrement les mélanges élastomériques utilisés pour la fabrication de tels pneumatiques.

Un pneumatique radial pour véhicule lourd de type génie civil est destiné à être monté sur une jante dont le diamètre au seat est supérieur ou égal à 25 pouces, selon la norme de l'organisme European Tyre and Rim Technical Organisation ou ETRTO.

Par exemple, des véhicules équipés de ces pneumatiques sont utilisés dans des mines à ciel ouvert pour transporter, à une vitesse maximale de 65 km/h, des matériaux extraits de carrières qui peuvent représenter une charge de plus de 350 tonnes. Les pneumatiques doivent être dimensionnés en conséquence avec un diamètre hors tout pouvant mesurer plus de 4 mètres et peuvent peser 5 tonnes chacun.

A titre d'illustration, un tel pneumatique a une désignation normalisée suivant l'ETRTO (European Technical Rim and Tyre Organisation) du type 50/80 R 57, avec une pression de gonflage à 650 kPa, ce qui signifie que la largeur nominale de la bande de roulement est de 50 pouces, que la hauteur des flancs du pneumatiques est de 80% de sa largeur nominale, et que ce pneumatique est destiné à être monter sur une roue de diamètre 57 pouces.

De façon générale, un pneumatique ayant une géométrie de révolution par rapport à un axe de rotation, sa géométrie est décrite dans un plan méridien contenant son axe de rotation. Pour un plan méridien donné, les directions radiale, axiale et circonférentielle désignent respectivement les directions perpendiculaire à l'axe de rotation, parallèle à l'axe de rotation et perpendiculaire au plan méridien.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts le plus souvent métalliques, parallèles entre eux et enrobés par un matériau polymérique de type élastomère ou mélange élastomérique. L'ensemble constitué par l'armature de sommet et la bande de roulement est appelé sommet.

L'armature de carcasse d'un pneumatique radial pour véhicule lourd de type génie civil comprend habituellement au moins une couche de carcasse constituée d'éléments de renforcement métalliques enrobés dans un mélange élastomérique d'enrobage. Les éléments de renforcement métalliques sont sensiblement parallèles entre eux et font, avec la direction circonférentielle, un angle compris entre 85° et 95°. La couche de carcasse comprend une partie principale, reliant les deux bourrelets entre eux et s'enroulant, dans chaque bourrelet, autour d'une tringle. La tringle comprend un élément de renforcement circonférentiel le plus souvent métallique entouré d'au moins un matériau, de manière non exhaustive, élastomérique ou textile. L'enroulement de la couche de carcasse autour de la tringle va de l'intérieur vers l'extérieur du pneumatique pour former un retournement, comprenant une extrémité. Le retournement, dans chaque bourrelet, permet l'ancrage de la couche d'armature de carcasse à la tringle du bourrelet.

Chaque bourrelet comprend un élément de remplissage prolongeant radialement vers l'extérieur la tringle. L'élément de remplissage est constitué d'au moins un mélange élastomérique de remplissage. L'élément de remplissage sépare axialement la partie principale et le retournement.

Chaque bourrelet comprend également un élément de protection prolongeant radialement vers l'intérieur le flanc et axialement extérieur au retournement. L'élément de protection est également au moins en partie en contact par sa face axialement extérieure avec le rebord de la jante. L'élément de protection est constitué d'au moins un mélange élastomérique de protection.

Chaque bourrelet comprend enfin un élément de bourrage axialement intérieur au flanc et à l'élément de protection et axialement extérieur au retournement. L'élément de bourrage est constitué d'au moins un mélange élastomérique de bourrage.

Chaque flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique. Au moins dans la zone de plus grande largeur axiale du pneumatique, le flanc s'étend axialement vers l'intérieur jusqu'à une couche de carcasse, axialement la plus extérieure de l'armature de carcasse.

Une zone épaule est la portion du pneumatique qui relie un flanc à la bande de roulement. Plus précisément, elle est comprise d'une part, entre la droite normale à la couche de carcasse et passant le milieu du flanc, et d'autre part, la droite normale à la couche de carcasse passant par le point situé sur la bande de roulement à une distance axiale égale au 4/5 de sa largeur nominale par rapport au plan équatorial.

Les pneumatiques de génie civil à structure radiale ont une armature de carcasse qui est reliée à l'armature de sommet par une couche de mélange élastomérique coussin positionnée le long de la couche de carcasse, axialement vers l'extérieur dans la zone épaule. Ce mélange coussin ci-après désigné mélange de couplage carcasse-sommet, assure le couplage de l'armature de carcasse avec l'armature de sommet. La mise en pression du pneumatique monté sur sa jante crée des tensions dans les renforts de la couche de carcasse qui à leur tour cisaillent le mélange de couplage carcasse-sommet qui va ensuite mettre en tension les renforts de l'armature de sommet. Le rôle de ce mélange de couplage est essentiel pour le bon fonctionnement du pneumatique.

Par mélange élastomérique, on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de caoutchouc considérée.

Un mélange élastomérique peut être caractérisé mécaniquement, en particulier après cuisson, par ses propriétés dynamiques, telles qu'un module de cisaillement dynamique G*= (G'2+G"2)1/2, où G' est le module de cisaillement élastique et G" le module de cisaillement visqueux, et une perte dynamique tgδ=G"/G'. Le module de cisaillement dynamique G* et la perte dynamique tgδ sont mesurés sur un viscoanalyseur de type Metravib VA4000, selon la norme ASTM D 5992-96. On enregistre la réponse d'un échantillon de mélange élastomérique vulcanisé entre 120°C et 130°C, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C ou 100°C.

Un mélange élastomérique peut également être caractérisé par des propriétés mécaniques statiques. Les essais de traction permettent de déterminer les contraintes d'élasticité et les propriétés à la rupture. Sauf indication différente, ils sont effectués conformément à la norme française N F T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

Un mélange élastomérique peut également être caractérisé par sa résistivité électrique qui caractérise l'aptitude du mélange à laisser les charges électriques se déplacer librement, et donc à permettre le passage d'un courant électrique. La résistivité électrique est généralement notée ρ, et son unité de mesure est en Ohm.mètre (Ω.m) mais il est usuel, dans le domaine du pneumatique, d'exprimer la mesure de la résistivité électrique en Ohm.centimètre ('Ω.cm). Le test de mesure de la résistivité électrique est décrit, par exemple, dans la norme ASTM-D257. Une résistivité électrique de 1 Ω.m, ou de 10² 'Ω.cm, correspond à la résistance au passage du courant électrique dans une portion cylindrique de mélange de 1 m de longueur et de 1 m² de section. La conductivité électrique est l'inverse de la résistivité électrique, noté σ et vérifiant σ=1/ρ. Par la suite, on utilisera indifféremment, la conductivité électrique σ ou la résistivité électrique ρ, suivant le contexte, pour caractériser les propriétés électriques des mélanges.

On entend par matériau très faiblement conducteur de l'électricité ou résistant électriquement un matériau présentant une résistivité électrique supérieure à 10⁸ 'Ω.cm. De même, on entend par matériau conducteur de l'électricité un matériau présentant une résistivité inférieure à 10⁶ 'Ω.cm. Ces matériaux peuvent être ou non des mélanges élastomériques.

Les conditions usuelles de roulage, en termes de pression, de charge et de vitesse, d'un pneumatique pour véhicule lourd de type génie civil, tel que, par exemple, un dumper destiné au transport de matériaux extraits de carrières ou de mines de surface à ciel ouvert, sont particulièrement sévères. A titre d'exemple, sur les sites d'extraction de matériaux, tels que des minerais ou du charbon, l'usage d'un véhicule de type dumper consiste, de manière simplifiée, en une alternance de cycles aller en charge et de cycles retour à vide. Lors d'un cycle aller en charge, le véhicule chargé transporte, principalement en montée, les matériaux extraits depuis des zones de chargement au fond de la mine, ou fond du « pit », jusqu'à des zones de déchargement : ce qui nécessite une bonne adhérence en motricité des pneumatiques. Lors d'un cycle retour à vide, le véhicule à vide retourne, principalement en descente, vers les zones de chargement au fond de la mine.

Le pneumatique représente le principal poste de coûts de ces véhicules de transport si bien que sa longévité est l'un des premiers critères du cahier des charges rédigé par les clients constructeurs de ces véhicules. Il s'agit de pouvoir utiliser le plus longtemps possible une monte de pneumatiques en établissant un compromis adéquat entre la longévité et l'endurance. Le pneumatique doit être suffisamment robuste pour supporter une longévité améliorée. Le document WO 2019/122618A1 donne des indications allant dans ce sens de compromis recherché.

L'impact environnemental de tels pneumatiques est également présent dans les cahiers des charges des clients constructeurs de ces véhicules. Une dimension telle que le 50/80 R57 a une masse totale de 3.8 tonnes dont 1 tonne pour les composantes métalliques, et 2.8 tonnes pour la masse des mélanges élastomériques, soit 74% de la masse totale du pneumatique. Les composants métalliques comprennent les deux tringles, plus toutes les couches composites formées de renforts métalliques enrobées dans des mélanges élastomériques.

Dans l'état de l'art, ces mélanges élastomériques sont principalement issus de matières premières fossiles telles que le pétrole. Ce sont donc essentiellement des hydrocarbures issus de la méthanisation d'êtres vivants morts et enfouis dans le sol depuis plusieurs millions d'années, jusqu'à parfois 650 millions d'années. Outre leur épuisement inéluctable, l'exploitation de ces hydrocarbures est à l'origine de problèmes environnementaux relatifs aux dégâts écologiques liés à leur extraction et à leur utilisation.

L'impact environnemental se mesure à toutes les étapes de définition du pneumatique : depuis l'extraction des matières premières fossiles, puis leur transformation en mélanges élastomériques, et fabrication du pneumatique, et son utilisation jusqu'à sa fin de vie.

Les inventeurs se sont ainsi donnés pour objectif de diminuer l'impact environnemental d'un pneumatique pour véhicules de génie civil sans dégrader ses performances telles que l'endurance, et la conductivité électrique.
Cet objectif a été atteint par un pneumatique pour véhicule lourd de type génie civil comprenant :
- des mélanges élastomériques issus de ressources non fossiles et/ou fossiles, tout mélange élastomérique ayant une perte viscoélastique tan (δ) définie comme étant le rapport du module de cisaillement visqueux G" sur le module de cisaillement élastique G', ces modules étant mesurés selon la norme ASTM D 5992-96, à une fréquence de 10 Hz pour une température de 100°C, et tout mélange élastomérique électro-conducteur étant défini comme ayant une résistivité électrique inférieure ou égale à 1E+06 Ohm centimètre (Q.cm), mesurée suivant la norme ASTM-D257 ;
- une bande de roulement ayant deux portions d'extrémités axiales ou ailes de bande de roulement axialement séparées par une portion centrale de bande de roulement;
- une armature de sommet, radialement intérieure à la bande de roulement, comprenant au moins une armature de protection, et une armature de travail, lesdites armatures étant formées respectivement de couches de protection, et de couches de travail comprenant des renforts métalliques enrobés dans un mélange élastomérique, ces couches ayant à leurs extrémités axiales une couche de mélange de bordure;
- une armature de carcasse, radialement intérieure à l'armature de sommet, comprenant au moins une couche de carcasse constituée de renforts métalliques enrobés dans un mélange élastomérique d'enrobage électro-conducteur, lesdits renforts métalliques étant sensiblement parallèles entre eux et faisant, avec la direction circonférentielle (XX'), un angle compris entre 85° et 95°, chaque couche de carcasse comprenant une partie principale, reliant deux bourrelets entre eux et s'enroulant dans chaque bourrelet, autour d'une tringle pour former un retournement;
- une couche de couplage carcasse-sommet constituée par un mélange élastomérique, électro-conducteur et intercalée entre l'armature de carcasse et l'armature de sommet, axialement vers l'extérieur dans la zone épaule;
- deux flancs reliant les ailes de bande de roulement aux deux bourrelets, lesdits bourrelets comprenant une couche de talon destinée à entrer en contact avec une jante, de telle sorte :
- la masse des mélanges élastomériques issus de ressources non fossiles est supérieure ou égale à 65 % de la masse totale des mélanges élastomériques contenus dans le pneumatique, au moins 75 % de la masse totale des mélanges élastomériques contenus dans le pneumatique est constitué de mélanges élastomériques qui ont chacun une perte viscoélastique tan (δ) inférieure ou égale à 0,065 et une résistivité électrique supérieure ou égale 1E+10 'Ω.cm ;
- une couche de liaison constituée d'un mélange élastomérique électro-conducteur est intercalée radialement entre la couche de couplage carcasse-sommet et l'armature de sommet et est en contact à son extrémité axialement extérieure avec l'aile de bande de roulement et à son extrémité axialement intérieure avec le mélange d'enrobage de la couche de carcasse ;
- l'aile de bande de roulement, la couche de liaison, le mélange d'enrobage de la couche de carcasse, et la couche de talon constituent un chemin conducteur préférentiel des charges électriques entre le sol et la jante lorsque le pneumatique est monté sur sa jante et écrasé sur le sol.

L'idée essentielle de l'invention est de remplacer les constituants des divers mélanges présents dans le pneumatique, généralement issus de produits pétroliers et donc de source fossile, par des constituants issus de ressources non fossiles. Ainsi les élastomères à base de produits pétroliers, dits élastomères synthétiques, sont remplacés par du caoutchouc naturel en totalité ou partiellement. Les charges de renforcement des mélanges sont choisies préférablement dans la famille des charges inorganiques comme par exemple la silice en totalité ou partiellement, en fonction des propriétés mécaniques et hystérétiques attendues. En général, les mélanges élastomériques contiennent des plastifiants pour faciliter leur mise en oeuvre industrielle. Les inventeurs proposent d'utiliser ici des huiles non aromatiques pour diminuer l'impact environnemental du pneumatique.

La baisse de l'hystérèse des mélanges, c'est-à-dire de leur dissipation thermique, est un autre axe de l'invention en lien avec l'endurance et la longévité du pneumatique. En général, les pneumatiques optimisés en hystérèse comprennent des mélanges de basse hystérèse situés à la périphérie externe, comme par exemple, la bande de roulement ou les flancs. Ici, les inventeurs proposent de nouvelles compositions de basse hystérèse pour les mélanges internes tels que par exemple les mélanges de bordure des couches de sommet, ou encore le mélange de couplage de l'armature de carcasse et de l'armature de sommet. Le gain en endurance résulte principalement de la baisse de la température de fonctionnement du pneumatique. Il faut donc des mélanges en caoutchouc naturel, chargés en silice pour concilier à la fois la baisse de l'impact environnemental, et la baisse de l'hystérèse. Mais, il faut aussi que les propriétés mécaniques des mélanges soient appropriées aux sollicitations subies.

L'utilisation des mélanges élastomériques avec des charges de renforcement en silice, s'est accompagnée d'une difficulté liée à l'accumulation d'électricité statique lors du roulage du véhicule, et à l'absence d'écoulement de ces charges vers le sol en raison de la très grande résistivité des mélanges élastomériques constituant la bande de roulement. L'électricité statique ainsi accumulée dans le pneumatique est susceptible de provoquer, lorsque certaines conditions particulières sont réunies, un choc électrique à l'occupant d'un véhicule, lorsqu'il est amené à toucher la carrosserie du véhicule. Cette électricité statique est, en outre, susceptible d'accélérer le vieillissement du pneumatique en raison de l'ozone générée par la décharge électrique. Elle peut également être à l'origine, en fonction de la nature du sol et du véhicule, d'un mauvais fonctionnement de la radio embarquée dans le véhicule en raison des interférences qu'elle génère.

La bande de roulement est donc divisée en trois portions : une portion centrale, et deux ailes de bande de roulement situées axialement de part et d'autre de la partie centrale. La portion centrale de la bande de roulement, optimisée en hystérèse n'est donc pas électro-conductrice. Il convient alors d'utiliser un mélange électro-conducteur pour les ailes de bande de roulement. Pour assurer l'existence d'un chemin électro-conducteur allant de la bande de roulement à la jante, une fine couche de mélange de liaison de l'ordre de 2 mm d'épaisseur relie les ailes de bandes de roulement à l'armature de carcasse. L'invention permet d'apporter une solution au compromis recherché de disposer d'un pneumatique utilisant des matériaux ne dérivant pas de produits fossiles tout en ayant des performances d'endurance conformes aux attentes, et tout en étant électro-conductrice.

Selon l'invention, la masse des mélanges élastomériques issus de ressources non fossiles est supérieure ou égale à 65 % de la masse totale des mélanges élastomériques contenus dans le pneumatique.

En considérant la part relative en masse des principaux postes du pneumatique à l'exception des composantes métalliques, les inventeurs ont optimisé la composition des mélanges de ces postes en caoutchouc naturel et en silice pour atteindre l'objectif de l'invention. A titre d'illustration pour la dimension 50/80R57, le tableau qui suit liste les principaux postes de mélanges ainsi que leur contribution à la masse du pneumatique :

**[Tableau 1]**

| Postes du pneumatique | Masse du poste en % de la masse du pneumatique dépourvu de renforts métallique | Commentaires |
|---|---|---|
| Partie centrale de la bande de roulement | 54% | Principale partie de la bande de roulement du pneumatique en contact avec le sol pendant le roulage, elle représente la plus forte proportion de mélange en masse. |
| Aile de bande de roulement | 5% | Partie à l'extrémité axiale de la bande de roulement au volume limité au juste nécessaire, en contact avec le sol et utilisé comme un maillon du circuit d'évacuation des charges électrostatiques. |
| Flanc | 12 % | Deuxième poste en masse du pneumatique relie la bande de roulement au bourrelet qui est en contact avec la jante. |
| Mélange de couplage mécanique de l'armature de carcasse à l'armature de sommet | 7% | Mélange interne reliant l'armature de carcasse à l'armature de sommet du pneumatique. Il transmet les tensions générées par le profil méridien de la couche de carcasse à l'armature de sommet. |
| Mélange de renfort contre le fluage de la couche de mélange étanche la plus radialement intérieure dans le pneumatique | 7 % | Couche de mélange positionnée radialement à l'intérieur de l'armature de carcasse pour limiter le fluage de la couche d'étanchéité radialement la plus intérieure du pneumatique. |
| Mélange de bourrage dans le bourrelet entre le retournement de la couche de carcasse et le flanc | 5% | Couche de mélange participant au fonctionnement du bourrelet. |
| Mélange de bordure des couches de sommet | 6% | Couche de mélange positionné aux extrémités axiales des couches de sommet pour renforcer leur endurance. |
| Autres mélanges | 4 % | Principalement mélange intérieur d'étanchéité, mélanges d'enrobage des couches métalliques, mélange du talon |
| Total | 100% | |

Le tableau 1 précédent montre la proportion en masse des différents mélanges du pneumatique et hiérarchise ceux qu'il faut traiter prioritairement pour supprimer totalement ou partiellement les composantes issues des produits fossiles. La cible de 65 % de la masse du pneumatique non dérivée de produits pétroliers est accessible en se focalisant sur les mélanges à la périphérie du pneumatique tels que la bande de roulement et les flancs, mais aussi en se focalisant sur les mélanges internes tels que le mélange de couplage mécanique de l'armature de carcasse et de l'armature de sommet ainsi le mélange de renfort interne anti fluage. Tous ces mélanges ont une composition avec un taux en pce de caoutchouc naturel supérieur ou égal à 50 pce donc significativement majoritaire par rapport aux autres composants du mélange. Le cumul de la contribution de chaque poste au prorata de son poids dans le pneumatique conduit à l'objectif revendiqué.

Toujours selon l'invention, au moins 75 % de la masse totale des mélanges du pneumatique est constitué de mélanges qui ont chacun une perte viscoélastique, tan (δ) inférieure ou égale à 0,065, et une résistivité électrique supérieure ou égale 1E+10 'Ω.cm.

**A** partir du tableau de hiérarchisation massique des mélanges, précédemment décrit, les inventeurs poursuivent un double objectif d'utiliser du caoutchouc naturel à des taux supérieurs ou égaux à 50 pce, tout en utilisant un système de charges de renforcement approprié pour baisser l'hystérèse des mélanges, mais qui présente l'inconvénient de conduire à des mélanges qui sont électriquement isolants. La mesure de la résistivité électrique de ces mélanges donne des valeurs supérieures à 1E+10 'Ω.cm. En revanche, l'hystérèse caractérisée par la valeur de tan (δ) est inférieure ou égale à 0.065 pour la majorité de ces mélanges.

Selon l'invention, une couche de mélange de liaison électro-conducteur est intercalée radialement entre la couche de couplage carcasse-sommet et l'armature de carcasse ; ladite couche de liaison est en contact à son extrémité axialement extérieure avec l'aile de bande de roulement, et est en contact à son extrémité axialement intérieure avec le mélange d'enrobage de la couche de carcasse.

La fonction de cette couche de mélange est d'assurer la continuité du chemin d'évacuation des charges électrostatiques. A son extrémité axialement extérieure, elle est en contact avec l'aile de bande de roulement qui est à son tour en contact avec le sol. A l'autre extrémité axialement intérieure, elle est en contact avec l'armature de carcasse. Cette couche de mélange de liaison est donc un maillon du circuit d'évacuation des charges électrostatiques.

Toujours selon l'invention, l'aile de bande de roulement, la couche de mélange de liaison, le mélange d'enrobage de la couche de carcasse, et la couche de talon, en contact avec la jante, constituent un chemin conducteur préférentiel des charges électriques entre le sol et la jante lorsque le pneumatique est monté sur sa jante et écrasé sur le sol.

Tous les mélanges du chemin d'évacuation des charges électrostatiques ont en commun d'avoir un renforcement avec du noir de carbone avec un taux au moins égal à 35 pce. Ils ont également en commun d'avoir une résistivité électrique d'une valeur inférieure ou égale à 1E+06 'Ω.cm. L'objectif d'obtenir un pneu électro-conducteur résulte du bon fonctionnement de ce chemin d'évacuation des charges électrostatiques. Ce qui signifie que le contact deux à deux des mélanges de cette chaîne doit être garanti pendant toute la vie du pneumatique.

Selon un mode de réalisation de l'invention, la couche de mélange de liaison, intercalée entre la couche de couplage carcasse-sommet et le mélange d'enrobage de la couche de carcasse est en contact avec l'aile de bande roulement à son extrémité radialement extérieure sur une distance LC1 d'au moins 10 mm, et est en contact à sa deuxième extrémité axialement intérieure avec le mélange d'enrobage de la couche de carcasse sur une distance LC2 également d'au moins 10 mm.

Les interfaces des mélanges constituants le chemin d'évacuation des charges électrostatiques doivent être en contact deux à deux sur une longueur d'au moins 10 mm, de manière à toujours garantir la continuité du chemin d'évacuation des charges électrostatiques quelques soient les aléas de fabrication. Le chemin d'évacuation des charges électrostatiques doit être opérationnel durant toute la vie du pneumatique.

Avantageusement, l'épaisseur de la couche de mélange de liaison mesurée le long de la normale à la couche de carcasse passant par le milieu de ladite couche de liaison a une valeur supérieure ou égale à 2 mm.

La couche de mélange de liaison n'a pas de fonction mécanique : c'est un maillon du chemin d'évacuation des charges électrostatiques. Ses dimensions sont donc fixées par les limites du procédé de fabrication en extrusion ou en calandrage. Les inventeurs ont toutefois validé une épaisseur minimale de 2 mm pour garantir une stabilité de la qualité de fabrication.

Encore avantageusement, le mélange élastomérique de liaison a une composition de caoutchouc à base d'une matrice de polyisoprène de caoutchouc naturel ou de synthèse, d'un système de réticulation, et d'une charge renforçante à un taux global au plus égal à 50 pce, et comprenant majoritairement du noir de carbone à un taux au moins égal à 20 pce, et au plus égal à 50 pce.

Le mélange élastomérique de liaison relie une aile de bande de roulement à l'armature de carcasse pour avoir un chemin continu d'évacuation des charges électrostatiques. La composition de ce mélange doit répondre au besoin d'avoir une résistivité électrique inférieure ou égale à 1E+06 Ohm centimètre. Ce résultat est obtenu pour un mélange comprenant une charge contenant majoritairement du noir de carbone à un taux d'au moins 20 pce et au plus égal à 50 pce.

Selon un mode de réalisation de l'invention, le mélange élastomérique d'au moins une aile de bande de roulement est une composition électro-conductrice de caoutchouc à base d'au moins de polyisoprène, d'un système de réticulation, et d'au moins une charge renforçante comprenant du noir de carbone, caractérisé par une surface BET au moins égale à 110 m²/g et par un taux au moins égal à 30 pce et au plus égal à 80 pce.

La conductivité électrique de l'aile de bande de roulement est obtenue par les charges de renforcement en noir de carbone, dotées d'une surface bet au moins égale à 110m2/g. La quantité de charges au moins égale à 30 pce et au plus égale à 80 pce garantit une mesure de résistivité électrique du mélange inférieur à 1E+06 Ohm.cm, ce qui est suffisant pour évacuer les charges électrostatiques.

Les ailes de bande de roulement sont en contact avec le sol, par conséquent, elles doivent être compatibles avec les exigences de performances d'adhérence et d'usure, en plus des propriétés électriques attendues. Les ailes de bande de roulement ont ainsi une épaisseur suffisante pour être en contact avec le sol pendant toute la durée de vie du pneumatique.

Préférentiellement, le mélange élastomérique de la portion centrale de bande de roulement est une composition de caoutchouc à base d'au moins un élastomère diénique, d'un système de réticulation, et d'une charge renforçante, à un taux global au plus égal à 40 pce, et comprenant du noir de carbone, et de la silice.

Dans un pneumatique du génie civil, la bande de roulement représente environ 54% de la masse totale de mélanges, et est, de ce fait, la principale source d'hystérèse. Pour améliorer l'endurance, une des solutions consiste à obtenir des mélanges élastomériques de très faible hystérèse pour limiter le niveau de température. En se libérant de la contrainte d'avoir un mélange électro-conducteur pour la portion centrale de la bande de roulement, la composition peut se focaliser sur la diminution de l'hystérèse. Ainsi on obtient une perte dynamique viscoélastique caractérisée par tan (δ) de l'ordre de 0.065, mesurée à 100°C et pour une fréquence de sollicitation de 10 Hz. Le mélange élastomérique de la portion centrale de bande de roulement a, par conséquent, une faible hystérèse tout en ayant des propriétés compatibles pour les performances d'usure et d'adhérence.

Préférentiellement, le mélange de bordure de la couche de protection a une composition de caoutchouc à base d'une matrice de polyisoprène de caoutchouc naturel, d'un système de réticulation, et d'une charge renforçante à un taux global au plus égal à 50 pce, et comprenant majoritairement de la silice à un taux au moins égal à 30 pce, et au plus égal à 50 pce.

Les mélanges de bordures sont connues pour leur fonction de blocage des cisaillements à l'extrémité axiale des couches du sommet. Un pneumatique en roulage est le siège de cisaillements cycliques de forte amplitude aux extrémités axiales des couches de sommet à cause des mis à plat périodiques de la bande de roulement. Des amorces de fissures peuvent se développer dans cette zone, et se propager dans la direction axiale du plan méridien. Ce phénomène est largement décrit dans l'état de l'art comme étant un clivage qui apparaît entre les couches du sommet, et pouvant dans le pire des cas conduire à la détérioration du pneumatique. Les amorces de fissures peuvent également se propager dans la direction circonférentielle dans un plan parallèle au plan équatoriale. Dans l'état de l'art, ce phénomène est connu sous l'appellation de déchaussement, car les cisaillements dans cette direction séparent les renforts du mélange élastomérique d'enrobage.

Les inventeurs ont voulu conserver la fonction de blocage des cisaillements des mélanges de bordures, tout leur en conférant des propriétés additionnelles de faible hystérèse. Ainsi, la dureté shore A des gommes de bordure est très forte avec un niveau d'environ 67, tout en ayant une hystérèse caractérisée par une valeur de tan (δ) inférieure à 0,065.

Toujours préférentiellement, le mélange élastomérique de bordure des couches de travail a la même composition que le mélange élastomérique de bordure des couches de protection.

Les mélanges élastomériques de bordures se positionnent à l'extrémité des couches de travail et de protection. Aux extrémités des couches de travail, les cisaillements sont de plus grandes amplitudes qu'aux extrémités des couches de protection. Mais, pour des raisons de standardisation de la fabrication, on peut utiliser le même mélange de bordures pour les deux armatures de travail et de protection.

Selon un mode de réalisation de l'invention, le mélange de la couche de couplage carcasse-sommet a une composition de caoutchouc à base d'une matrice de polyisoprène de caoutchouc naturel, d'un système de réticulation, et d'une charge renforçante à un taux global au plus égal à 55 pce, et comprenant majoritairement de la silice à un taux au moins égal à 35 pce, et au plus égal à 55 pce.

Comme vu précédemment, la couche de couplage carcasse-sommet a un rôle essentiel pour le bon fonctionnement du pneumatique. Lors du gonflage du pneumatique à sa pression de consigne, le cisaillement de ce mélange dans le plan méridien transmet la tension aux couches de sommet qui se distribuent dans les renforts, selon l'angle qu'ils font avec la direction circonférentielle. Ce mélange subit des déformations importantes, il est donc nécessaire d'avoir une formulation qui minimise l'hystérèse.

Les inventeurs proposent un mélange sur une base de caoutchouc naturel renforcé majoritairement par de la silice à taux maximal de 55 pce. Cette composition a le double avantage de ne pas utiliser des matières premières d'origine pétrolière et de disposer d'une faible hystérèse. Ceci est d'autant plus nécessaire que le mélange de couplage carcasse-sommet se positionne dans la zone épaule du pneumatique, là où les déformations et donc la température sont les plus élevées.

Avantageusement, le mélange élastomérique de renfort anti-fluage a la même composition que le mélange élastomérique de couplage mécanique de l'armature de carcasse et de l'armature de sommet.

La plupart des pneumatiques sans chambre à air, qui sont aussi connus sous la désignation "pneumatiques tubeless", destinés à être gonflés avec un gaz de gonflage, comme par exemple l'air, comportent une couche intérieure d'étanchéité constituée d'un mélange imperméable au gaz de gonflage, recouvrant la surface intérieure du pneumatique. Ce mélange est le plus souvent formé par une composition élastomérique à base de butyle.

Afin de limiter le fluage de la couche intérieure d'étanchéité entre les renforts de la couche de carcasse, il est d'usage d'intercaler entre la couche intérieure d'étanchéité, et la couche de carcasse une couche de mélange anti-fluage destiné à diminuer, voir à éliminer ce fluage. Les inventeurs ont observés que le mélange de couplage carcasse-sommet, qui est déjà optimisé en hystérèse, et qui dispose de propriétés mécaniques appropriées pouvait remplir cette fonction de renfort anti-fluage. Ce choix participe à la démarche de standardisation de la fabrication en limitant le nombre de matériaux différents utilisés.

Encore avantageusement, le mélange élastomérique de la couche de bourrage dans le bourrelet, axialement extérieur au retournement de la couche de carcasse, et axialement intérieur à la couche de flanc a la même composition que le mélange élastomérique de couplage mécanique de l'armature de carcasse et de l'armature de sommet.

Dans ce mode de réalisation, le mélange de couplage des armatures de carcasse et du sommet a une composition de caoutchouc à base d'une matrice d'au moins un coupage de polyisoprène de caoutchouc naturel, d'un système de réticulation, et d'une charge renforçante à un taux global au plus égal à 55 pce, et comprenant majoritairement de la silice à un taux au moins égal à 35 pce, et au plus égal à 55 pce. La perte viscoélastique à 10 Hz pour une température de 100°C, tan (δ), est inférieure ou égal à 0,05.

Avec la composition du mélange ci-dessus citée, on retrouve un bon compris sur l'hystérèse et la cohésion et donc sur la résistance à la fissuration. Par ailleurs, quand ce mélange est utilisé en poste de bourrage du bourrelet, il est en contact avec le retournement de la couche de carcasse sur la face axialement intérieure. Plus précisément, le contact s'établit avec le mélange d'enrobage de la couche de carcasse comme lors d'une utilisation en poste anti-fluage à l'épaule. La qualité de l'adhésion et donc la tenue de l'interface est favorisée. Enfin, dans la zone qui subit de fortes charges, les propriétés d'allongement de ce mélange participent à une bonne endurance du bourrelet. Sous une contrainte à 100% de déformation, de 1.5 MPa, l'allongement du mélange est supérieur ou égal à 16%.

Dans un mode de réalisation préféré, le mélange élastomérique de chaque flanc a une composition de caoutchouc à base d'au moins un coupage de polyisoprène de caoutchouc naturel, et de polybutadiène, d'un système de réticulation, et d'une charge renforçante, à un taux global au plus égal à 45 pce, et comprenant du noir de carbone, à un taux au plus égal à 5 pce, et, majoritairement, de la silice, à un taux au moins égal à 20 pce et au plus égal à 40 pce.

La baisse de l'hystérèse doit pouvoir être réalisée sans détériorer les propriétés mécaniques telles que la résistance à la fatigue et, plus particulièrement, la résistance à la fissuration. En effet, les flancs de pneumatique Génie Civil sont soumis à de très fortes sollicitations à la fois en termes de déformation en flexion, d'agressions, et de thermique. Ces sollicitations statiques ou dynamiques prolongées des flancs, en présence d'ozone, font apparaître des craquelures ou des fissures plus ou moins marquées dont la propagation sous l'effet des contraintes peut provoquer un dommage important du flanc concerné. Il est donc important que les mélanges élastomériques constituant les flancs de pneumatique, pour le Génie civil en particulier, présentent de très bonnes propriétés mécaniques, conférées en particulier par un taux élevé de charges renforçantes.

Préférentiellement, le mélange élastomérique de la portion centrale de bande de roulement a une perte viscoélastique tan (δ) d'une valeur au plus égale à 0.065.

Préférentiellement, le mélange élastomérique de chaque flanc a une perte viscoélastique tan (δ) d'une valeur au plus égale à 0.12.

Préférentiellement, le mélange élastomérique de la couche de couplage carcasse-sommet a une perte viscoélastique tan (δ) d'une valeur au plus égale à 0.06.

Préférentiellement, le mélange élastomérique de bordure des couches de protection a une perte viscoélastique, tan (δ) d'une valeur au plus égale à 0.06.

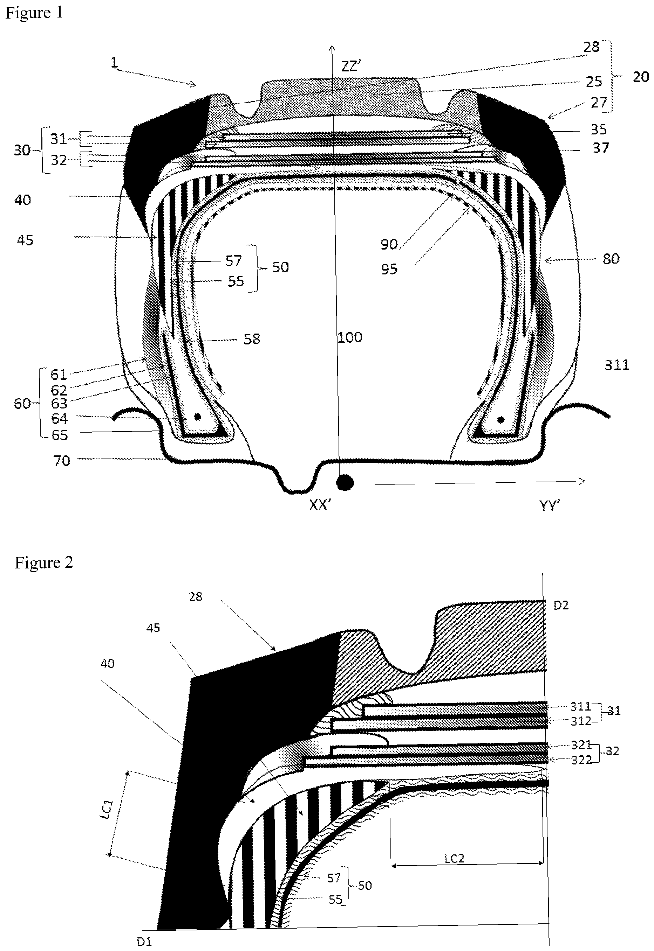

L'architecture du pneumatique selon l'invention sera mieux comprise en référence à la figure 1, non à l'échelle, qui représente une demi-coupe méridienne d'un pneumatique symétrique par rapport au plan équatorial contenant l'axe (OZ).

La figure 1 représente schématiquement un pneumatique 1 conforme à l'invention destiné à être utilisé sur des véhicules de type Dumper.

La figure 2 représente un grossissement de la figure 1 dans la zone épaule du pneumatique. On entend par zone épaule, la portion du pneumatique comprise d'une part, entre la droite D1, normale à la couche de carcasse et passant le milieu du flanc, et d'autre part, la droite D2, normale à la couche de carcasse passant par le point situé sur la bande de roulement positionné à une distance axiale égale au 4/5 de sa largeur nominale par rapport au plan équatorial.

Sur la figure 1, on peut voir dans un plan méridien d'un pneumatique 1 de l'invention :
- une bande de roulement 20 comprenant, à chaque extrémité axiale, une portion d'extrémité axiale ou ailes de bande de roulement (27, 28) ;
- une armature de sommet 30, radialement intérieure à la bande de roulement 20, est constituée au moins d'une armature de protection 31, et d'une armature de travail 32. Les armatures de protection 31, et de travail 32 sont formées de renforts métalliques (311, 322) enrobés dans un mélange élastomérique ;
- une couche de mélange élastomérique de bordure 37, respectivement 35, est positionnée aux extrémités axialement extérieures des couches de protection 31, respectivement des couches de travail 32;
- une armature de carcasse 50 comprenant au moins une couche de carcasse constituée de renforts métalliques 55 enrobés dans un mélange élastomérique d'enrobage 57 électro-conducteur. Les renforts métalliques sont sensiblement parallèles entre eux et font, avec la direction circonférentielle (XX'), un angle compris entre 85° et 95°. La couche de carcasse comprend une partie principale, reliant les deux bourrelets 60 entre eux et s'enroulant dans chaque bourrelet 60, autour d'une tringle 64. L'enroulement de la couche de carcasse autour de la tringle 64 va de l'intérieur vers l'extérieur du pneumatique pour former un retournement 62, comprenant une extrémité. Le retournement 62 dans chaque bourrelet 60, permet l'ancrage de la couche d'armature de carcasse 50 à la tringle 64 du bourrelet 60 ;
- une couche de mélange 45 est intercalée entre l'armature de carcasse 50 et l'armature de sommet 30, positionnée le long de la couche de carcasse 50, axialement vers l'extérieur dans la zone épaule. Cette couche de mélange 45 assure le couplage de l'armature de carcasse 50 avec l'armature de sommet 30. La mise en pression du pneumatique monté sur sa jante crée des tensions dans les renforts 55 de la couche de carcasse 50 qui à leur tour cisaillent le mélange de couplage carcasse-sommet 45 qui va ensuite mettre en tension les renforts de l'armature de sommet 30 ;
- deux flancs 80 relient les ailes de bande de roulement (27, 28) aux deux bourrelets 60 ;
- une cavité intérieure (100) destinée à être gonflée par un gaz, et comprenant, à partir de la cavité intérieure :
   - une couche intérieure d'étanchéité (95) constituant la paroi de la cavité intérieure, destinée à entrer en contact avec un gaz de gonflage,
   - une couche anti-fluage (90), extérieure à la couche intérieure d'étanchéité.

Les extrémités hautes, radialement extérieure, des ailes de bande de roulement (27, 28) sont en contact avec la portion centrale de bande de roulement 25 sur toute son épaisseur.

La figure 2 représente un détail de la figure 1 dans la zone épaule du pneumatique. Une couche de mélange de liaison électro-conducteur 40 est positionnée radialement vers l'extérieur sur la couche de couplage carcasse-sommet 45. Ladite couche de liaison 40 est en contact avec l'aile de bande de roulement 27 sur une longueur LC1 à son extrémité axialement extérieure. A l'autre extrémité axialement intérieure, la couche 40 est en contact avec la couche d'enrobage 57 de la couche de carcasse sur une longueur LC2.

L'invention a été plus particulièrement étudiée sur un pneumatique pour véhicule de type Dumper, de dimension 50/80R57 conformément à l'invention, et telle que représentée sur la figure 1.

Les résultats de l'invention ont été constatés sur un pneumatique réalisé suivant l'invention, comparés aux résultats de simulation obtenus sur un pneu de référence de même dimension, comprenant une bande de roulement en une seule portion, conformément à l'état de l'art.

L'utilisation du caoutchouc naturel a été généralisée à presque tous les postes du pneumatique, de la bande de roulement au bourrelet. Mais, le flanc qui représente une masse d'environ 12 % de la masse totale du pneumatique a une composition avec 50 pce de caoutchouc naturel et 50 pce de butadiène. Les propriétés de très bonne résistance du butadiène à l'abrasion le destinent à une utilisation en poste de flanc du pneumatique. Des additifs antioxydants sont ajoutés pour le protéger du vieillissement compte tenu de sa position dans le pneumatique en contact de l'air ambiant.

Les mélanges ont été renforcés avec des charges en silice sauf pour ceux appartenant au chemin d'évacuation des charges électrostatiques, qui eux gardent un renforcement avec du noir de carbone.

Des plastifiants sont ajoutés à certains mélanges comme les flancs pour faciliter leur processabilité lors de la fabrication du pneumatique. Ces plastifiants ont été choisis sans huiles aromatiques dérivées du pétrole. Un tel exemple de plastifiant est le tétrakis(diméthylamino)éthylène (TDAE). Mais dans d'autres cas, les plastifiants ont été supprimés comme pour les mélanges de la bande de roulement, ou encore le mélange de couplage carcasse sommet.

Plus précisément, les inventeurs ont utilisés les compositions suivantes pour la bande de roulement :

**[Tableau 2]**

| Compositions | Elastomère: NR (Natural Rubber) | Elastomère BR (Buadieene) | Charge Noir de carbone(1) | Charge Noir recouvert de Silice (2) | Agent de Couplage | Agent de Protection (3) | Agent de vulcanisation (4) (5) | Plastifiant |
|---|---|---|---|---|---|---|---|---|
| Ailes de la bande de roulement | 100 | e | 50 | 0 | 1 | 1,5 | 6,6 | 0 |
| Portion centrale de la bande de roulement | 100 | 0 | 0 | 50 | 1 | 1,5 | 6,6 | 0 |

| | | | | | | | | |
|---|---|---|---|---|---|---|---|---|
| *1-) N134 commercialisé par la société Cabot Corporation* *2-) « CRX2125 » commercialisé par la société Cabot Corporation* *3-) N-1,3-diméthylbutyl-N-phényl-para-phénylènediamine "Santoflex 6-PPD" commercialisé par la société Flexsys,* *4-) oxyde de zinc de grade industriel commercialisé par la société Umicore* *5-) N-cyclohexyl-2-benzothiazyl-sulfénamide "Santocure CBS" commercialisé par la société Flexsys* | | | | | | | | |

D'après la composition du mélange de la portion centrale de la bande de roulement, la masse de caoutchouc naturel représente 62.9% de la masse de ce mélange. Toujours pour la dimension 50/80 R57, la portion centrale de la bande de roulement représente 54 % de la masse totale des mélanges du pneumatique. Autrement dit, la proportion de matériaux non fossiles dans la composition de la portion centrale de la bande de roulement représente une contribution de 34 % de la masse cumulée des mélanges du pneumatique. Pour les ailes de bande de roulement en procédant au même raisonnement, la masse des matériaux non fossiles est à environ 3% de la masse cumulée des mélanges du pneumatique.

Les propriétés des mélanges de la bande de roulement mesurés sur des éprouvettes et résultant des choix de composition chimique sont regroupées dans le tableau 3:

**[Tableau 3]**

| Propriétés | Mélange elastomérique de l'aile bande de roulement roulement | Mélange élastomérique de la portion centrale de bande de roulement |
|---|---|---|
| Résistivité électrique en Log (Ω.cm) | 5.7 | >11 |
| tan ( δ) | 0.08 | 0.065 |

Le mélange de la portion centrale de la bande de roulement a une composition à base d'une matrice élastomérique comprenant un élastomère diénique et une charge renforçante comprenant majoritairement une charge recouverte au moins partiellement de silice.

Dans ce mode de réalisation, la portion centrale de bande de roulement est électriquement isolante. L'évacuation des charges électrostatiques est alors opérée selon le chemin de conduction définie par l'invention qui passe par les ailes de bande de roulement en contact avec le sol et qui sont toujours conductrices d'électricité.

Les ailes de bande de roulement sont au contact avec le sol lors du roulage du pneumatique. Le renforcement de l'élastomère de base par du noir de carbone en quantité adéquate garantit une conductivité électrique inférieure ou égale à 1E+06 ohm centimètre. Le volume de ce mélange est limité au juste nécessaire pour assurer la conduction des charges électrostatiques. La solution de la bande de roulement en trois parties permet à la fois d'augmenter le taux d'élastomère provenant de ressources naturelles, tout en diminuant l'hystérèse.

Dans un mode de réalisation simplifiée de l'invention, les inventeurs ont utilisé la même composition pour les mélanges de bordure des couches de protection, et des couches de travail, comme indiqué dans le tableau 4 qui suit :

**[Tableau 4]**

| Composions | Elastomère NR (Natural Rubber) | Elastomère BR (Buadiéene) | Charge renforcante Noir de carbone | Charge renforcante Silice | Agent de Couplage Silane | Agent de Protection | Agent de vulcanisation | Plastifiant |
|---|---|---|---|---|---|---|---|---|
| Mélange de bordure des couches sommet | 100 | 0 | 1 | 45 | 6 | 3,92 | 13,7 | 0 |

Selon la composition du mélange de bordure des couches de l'armature sommet, listées dans le tableau 4, la proportion de caoutchouc naturel est à 100 pce, et les charges de renforcement sont à 45 pce de silice. Afin préserver l'endurance des couches de sommet de toute migration d'huile qui est nuisible pour l'endurance du sommet, la composition des mélanges de bordures est sans plastifiants. D'après la composition de ce mélange, la masse de caoutchouc naturel et de silice sont à hauteur de 84% de la masse du mélange, et à hauteur d'environ 5.1 % de la masse totale des mélanges.

La couche de mélange de couplage est intercalée entre l'armature de carcasse et l'armature de sommet. D'après l'invention sa composition est dans le tableau qui suit:

**[Tableau 5]**

| Compositions | Elastomre NR (Natural Rubber) | Elastomre BR (Buadièene) | Charge renforcante Noir de carbone N330 | Charge renforcante Silice | Agent de Couplage Silane | Agent de Protection | Agent de vulcanisation | Plastifiant |
|---|---|---|---|---|---|---|---|---|
| Mélange de couplage Carcasse sommet | 100 | | 1 | 35 | 2 | 3,8 | 8,8 | 0 |

La couche de couplage de l'armature de carcasse à l'armature de sommet a une proportion de 100 pce de caoutchouc naturel, renforcée par 35 pce de silice et de 2 pce de noir de carbone. La masse cumulée du caoutchouc naturel et de la silice représente un taux de 89% de la masse de ce mélange, et un taux de 6,2% de la masse totale des mélanges.

Le rôle du mélange de couplage de l'armature de carcasse à l'armature de sommet est essentiel pour le bon fonctionnement du pneumatique. En effet, la mise en pression du pneumatique monté sur sa jante crée des tensions dans les renforts de la couche de carcasse qui à leur tour cisaillent le mélange de couplage carcasse-sommet qui va ensuite mettre en tension les renforts de l'armature de sommet. Les propriétés mécaniques du mélange de couplage doivent être appropriées pour le fonctionnement de l'invention. Dans le tableau qui suit, sont regroupées les principales propriétés mécaniques de ce mélange:

**[Tableau 6]**

| Mélange de couplage carcasse sommet | Propriétés |
|---|---|
| Résistivité électrique Log (Ω.cm) | >11 |
| G'(Mpa) | 1,15 |
| tan (δ) | 0,06 |

Le module de rigidité statique du mélange de couplage carcasse sommet à 10% de déformation est de 1,15 MPA et la perte hystérétique mesurée par tan (δ) est 0,06.

Dans une approche de standardisation industrielle, les inventeurs ont observé que le mélange de couplage de l'armature de carcasse à l'armature de sommet, peut être utilisé également dans le poste de renfort anti-fluage de la couche de carcasse ainsi que dans le poste de bourrage du bourrelet. Les propriétés de ce mélange sont compatibles pour ces deux postes du pneumatique.

Pour ce qui des flancs du pneumatique, qui représente le deuxième poste en masse d'élastomère après la bande de roulement, sa composition doit également conduire à une diminution de l'hystérèse. Cependant cette baisse de l'hystérèse doit pouvoir être réalisée sans détériorer, les propriétés mécaniques telles que la résistance à la fatigue et, plus particulièrement, la résistance à la fissuration. En effet, les flancs de pneumatique Génie Civil sont soumis à de très fortes sollicitations à la fois en termes de déformation en flexion, d'agressions, et de thermique. Ces sollicitations statiques ou dynamiques prolongées des flancs, en présence d'ozone, font apparaître des craquelures ou des fissures plus ou moins marquées dont la propagation sous l'effet des contraintes peut provoquer un dommage important du flanc concerné. Il est donc important que les mélanges élastomériques constituant les flancs de pneumatique présentent de très bonnes propriétés mécaniques, conférées en particulier par un taux élevé de charges renforçantes. Les inventeurs proposent la composition suivante :

**[Tableau 7]**

| Compositions | Elastomére NR (Natural Rubber) | Elastomére BR (Buadièene) | Charge renforcante Noir de carbone | Charge renforcante Silice | Agent de Couplage Silane | Agent de Protection | Agent de vulcanisation | Plastifiant |
|---|---|---|---|---|---|---|---|---|
| Mélange du Flanc | 50 | 50 | 3 | 29 | 0 | 4 | 5,3 | 10 |

**La** composition des flancs conduit à une faible hystérèse mesurée par une valeur de tan (δ) inférieure ou égale à 0.12. Les plastifiants pour faciliter la mise en oeuvre industrielle sont à hauteur de 10 pce d'huile TDAE. La masse cumulée de caoutchouc naturel et de silice représente une proportion de 52.2 % de la masse de ce mélange. Compte tenu de la proportion de 12 % que représente la masse du flanc par rapport à la masse du pneumatique dépourvu de ses renforts métalliques, la masse du caoutchouc naturel cumulée à celle de la silice représente une proportion de 6.3 % de la masse totale des mélanges du pneumatique.

**Le** tableau 8 qui suit récapitule la proportion des matériaux non fossiles présente dans le pneumatique de l'invention. La proportion de chaque poste en masse est ramenée à la masse totale du pneumatique sans ses renforts métalliques :

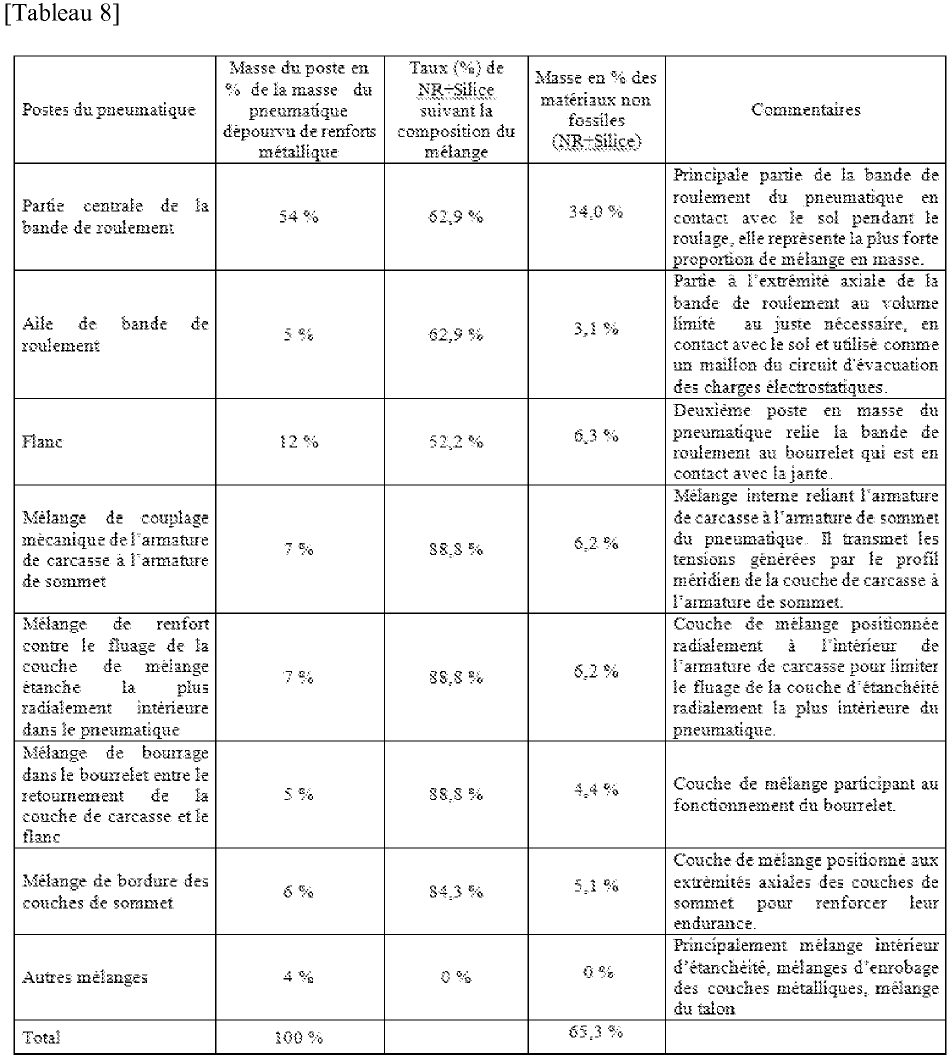

En récapitulant les mesures de perte viscoélastique et de résistivité électrique de chaque poste, on obtient le tableau 9 suivant :

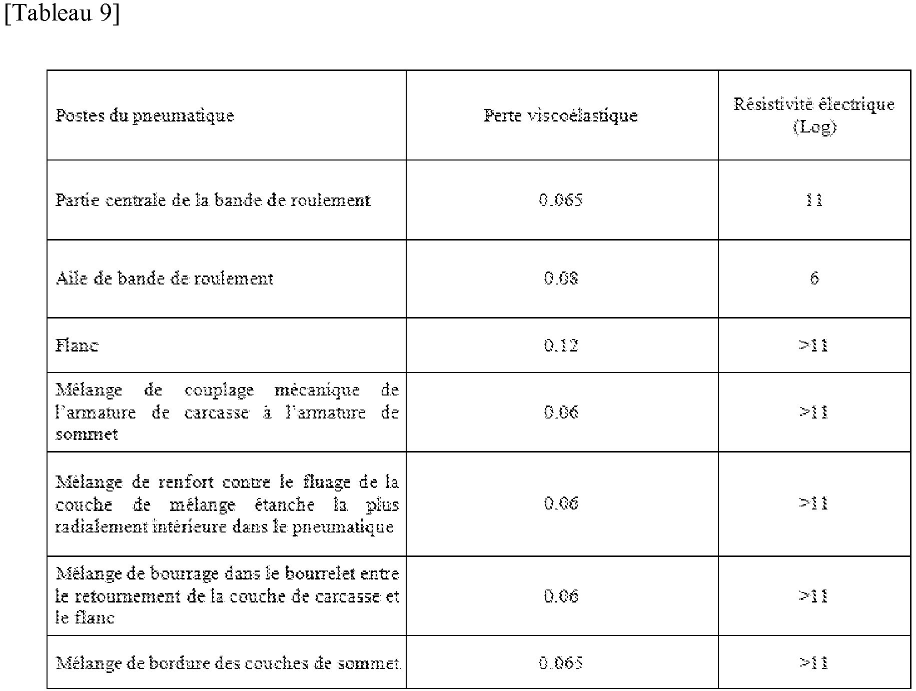

Le pneumatique de l'invention ci-dessus décrit est donc bien conforme à l'objet revendiqué.

Le tableau 10 qui suit présente les résultats globaux obtenus sur un pneumatique de l'invention :

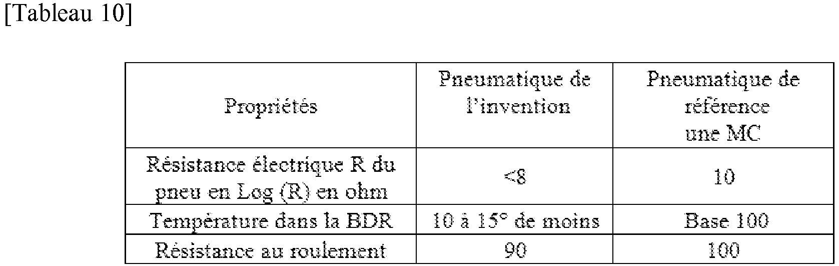

La résistance électrique du pneu de l'invention est réduite d'au moins un facteur 100 par rapport à la référence de la marche courante.

L'objectif de l'invention est atteint avec un pneumatique constitué de matériaux non dérivés des ressources fossiles à hauteur de 65 % en masse hors composants métalliques. En usage, l'impact environnemental est significativement réduit par une consommation en carburant du véhicule plus faible, consécutive à une résistance au roulement améliorée de 10%.

## Revendications

1. Pneumatique (1) pour véhicule lourd de type génie civil comprenant:
- des mélanges élastomériques issus de ressources non fossiles et/ou fossiles, tout mélange élastomérique ayant une perte viscoélastique tan (δ) définie comme étant le rapport du module de cisaillement visqueux G" sur le module de cisaillement élastique G', ces modules étant mesurés selon la norme ASTM D 5992-96, à une fréquence de 10 Hz pour une température de 100°C, et tout mélange élastomérique électro-conducteur étant défini comme ayant une résistivité électrique inférieure ou égale à 1E+06 Ohm centimètre ('Ω.cm), mesurée suivant la norme ASTM-D257 ;
- une bande de roulement (20) ayant deux portions d'extrémités axiales ou ailes de bande de roulement (27, 28) axialement séparées par une portion centrale de bande de roulement (25);
- une armature de sommet (30), radialement intérieure à la bande de roulement (20), comprenant au moins une armature de protection (31), et une armature de travail (32), lesdites armatures étant formées respectivement de couches de protection(311, 312), et de couches de travail (321,322) comprenant des renforts métalliques enrobés dans un mélange élastomérique, ces couches ayant à leurs extrémités axiales une couche de mélange de bordure (35, 37) ;
- une armature de carcasse (50), radialement intérieure à l'armature de sommet (30), comprenant au moins une couche de carcasse constituée de renforts métalliques (55) enrobés dans un mélange élastomérique d'enrobage (57) électro-conducteur, lesdits renforts métalliques étant sensiblement parallèles entre eux et faisant, avec la direction circonférentielle (XX'), un angle compris entre 85° et 95°, chaque couche de carcasse comprenant une partie principale (58), reliant deux bourrelets (60) entre eux et s'enroulant dans chaque bourrelet (60), autour d'une tringle (64) pour former un retournement (62) ;
- une couche de couplage carcasse-sommet (45) constituée par un mélange élastomérique, électro-conducteur et intercalée entre l'armature de carcasse (50) et l'armature de sommet (30), axialement vers l'extérieur dans la zone épaule;
- deux flancs (80) reliant les ailes de bande de roulement (27, 28) aux deux bourrelets (60), lesdits bourrelets (60) comprenant une couche de talon (65) destinée à entrer en contact avec une jante (70) ;
**caractérisé en ce que** la masse des mélanges élastomériques issus de ressources non fossiles est supérieure ou égale à 65 % de la masse totale des mélanges élastomériques contenus dans le pneumatique, **en ce qu'**au moins 75% de la masse totale des mélanges élastomériques contenus dans le pneumatique est constitué de mélanges élastomériques qui ont chacun une perte viscoélastique tan(δ) inférieure ou égale à 0,065, et une résistivité électrique supérieure ou égale 1E+10 'Ω.cm, **en ce qu'**une couche de liaison (40) constituée d'un mélange élastomérique électro-conducteur est intercalée radialement entre la couche de couplage carcasse-sommet (45) et l'armature de sommet (30), et est en contact à son extrémité axialement extérieure avec l'aile de bande de roulement (27) et à son extrémité axialement intérieure avec le mélange d'enrobage de la couche de carcasse (57), **et en ce que** l'aile de bande de roulement (27), la couche de liaison (40), le mélange d'enrobage de la couche de carcasse (57), et la couche de talon (65) constituent un chemin conducteur préférentiel des charges électriques entre le sol et la jante (70) lorsque le pneumatique est monté sur sa jante (70) et écrasé sur le sol.

2. Pneumatique (1) selon la revendication 1, dans lequel la couche de liaison (40) est en contact avec l'aile de bande roulement (27) à son extrémité radialement extérieure sur une distance LC1 égale à au moins 10 mm, et est en contact à son extrémité axialement intérieure avec le mélange d'enrobage de la couche de carcasse (57) sur une distance LC2 égale à au moins 10 mm.

3. Pneumatique (1) selon l'une des revendications 1 ou 2, dans lequel l'épaisseur de la couche de liaison (40) mesurée le long de la droite normale à la couche de carcasse passant par le milieu de ladite couche de liaison (40) est supérieure ou égale à 2 mm.

4. Pneumatique (1) selon l'une quelconque des revendications 1 à 3, dans lequel le mélange élastomérique de liaison (40) a une composition de caoutchouc à base d'une matrice de polyisoprène de caoutchouc naturel ou de synthèse, d'un système de réticulation, et d'une charge renforçante à un taux global au plus égal à 50 pce, et comprenant majoritairement du noir de carbone à un taux au moins égal à 20 pce, et au plus égal à 50 pce.

5. Pneumatique (1) selon l'une quelconque des revendications 1 à 4, dans lequel le mélange élastomérique d'au moins une aile de bande de roulement (27, 28) est une composition électro-conductrice de caoutchouc à base d'au moins de polyisoprène, d'un système de réticulation, et d'au moins une charge renforçante comprenant du noir de carbone, **caractérisé par** une surface BET au moins égale à 110 m2/g et par un taux au moins égal à 30 pce et au plus égal à 80 pce.

6. Pneumatique (1) selon l'une quelconque des revendications 1 à 5, dans lequel le mélange élastomérique de la portion centrale (25) de la bande de roulement (20) est une composition de caoutchouc à base d'au moins un élastomère diénique, d'un système de réticulation, et d'une charge renforçante, à un taux global au plus égal à 40 pce, et comprenant du noir de carbone, et de la silice.

7. Pneumatique (1) selon l'une quelconque des revendications 1 à 6, dans lequel le mélange de bordure (35) de la couche de protection (311,312) a une composition de caoutchouc à base d'une matrice de polyisoprène de caoutchouc naturel, d'un système de réticulation, et d'une charge renforçante à un taux global au plus égal à 50 pce, et comprenant majoritairement de la silice à un taux au moins égal à 30 pce, et au plus égal à 50 pce.

8. Pneumatique (1) selon l'une quelconque des revendications 1 à 7, dans lequel le mélange élastomérique de bordure (37) des couches de travail (321,322) a la même composition que le mélange élastomérique de bordure (35) des couches de protection (311,312).

9. Pneumatique (1) selon l'une quelconque des revendications 1 à 8, dans lequel le mélange de la couche de couplage carcasse-sommet (45) a une composition de caoutchouc à base d'une matrice de polyisoprène de caoutchouc naturel, d'un système de réticulation, et d'une charge renforçante à un taux global au plus égal à 55 pce, et comprenant majoritairement de la silice à un taux au moins égal à 35 pce, et au plus égal à 55 pce.

10. Pneumatique (1) selon l'une quelconque des revendications 1 à 9, dans lequel le pneumatique comprend un mélange élastomérique de renfort anti-fluage (90), positionné axialement et radialement intérieurement au mélange d'enrobage de la couche de carcasse (57) et extérieurement à une couche intérieure d'étanchéité (95), et dans lequel le mélange élastomérique de renfort anti-fluage (90) a la même composition que le mélange élastomérique de couplage mécanique de l'armature de carcasse et de l'armature de sommet.

11. Pneumatique (1) selon l'une quelconque des revendications 1 à 10, dans lequel le mélange élastomérique de la couche de bourrage (61) dans le bourrelet (60), axialement extérieur au retournement (62) de la couche de carcasse (57), et axialement intérieur à la couche de flanc (80) a la même composition que le mélange élastomérique de couplage mécanique de l'armature de carcasse et de l'armature de sommet.

12. Pneumatique (1) selon l'une quelconque des revendications 1 à 11, dans lequel le mélange élastomérique de chaque flanc (80) a une composition de caoutchouc à base d'au moins un coupage de polyisoprène de caoutchouc naturel, et de polybutadiène, d'un système de réticulation, et d'une charge renforçante, à un taux global au plus égal à 45 pce, et comprenant du noir de carbone, à un taux au plus égal à 5 pce, et, majoritairement, de la silice, à un taux au moins égal à 20 pce et au plus égal à 40 pce.

13. Pneumatique (1) selon l'une quelconque des revendications 1 à 12, dans lequel le mélange élastomérique de la portion centrale de bande de roulement (25) a une perte viscoélastique tan (δ) d'une valeur au plus égale à 0.065.

14. Pneumatique (1) selon l'une quelconque des revendications 1 à 13, dans lequel le mélange élastomérique de chaque flanc (80) a une perte viscoélastique tan (δ) d'une valeur au plus égale à 0.12.

15. Pneumatique (1) selon l'une quelconque des revendications 1 à 14, dans lequel le mélange élastomérique de la couche de couplage carcasse-sommet (45) a une perte viscoélastique tan (δ) d'une valeur au plus égale à 0.06

## Patentansprüche

1. Reifen (1) für ein Baustellenschwerlastfahrzeug, umfassend:
- Elastomermischungen aus nicht fossilen und/oder fossilen Ressourcen, wobei jede Elastomermischung einen viskoelastischen Verlustfaktor tan (5), definiert als das Verhältnis des viskosen Schermoduls G" zum elastischen Schermodul G', aufweist, wobei diese Module nach der Norm ASTM D 5992-96 bei einer Frequenz von 10 Hz bei einer Temperatur von 100 °C gemessen werden, und wobei jede elektrisch leitfähige Elastomermischung als einen nach der Norm ASTM-D257 gemessenen spezifischen elektrischen Widerstand kleiner als oder gleich 1E+06 Ohm-Zentimeter ('Ω.cm) aufweisend definiert ist;
- einen Laufstreifen (20), der zwei axiale Endabschnitte oder Laufstreifenausläufe (27, 28) aufweist, die durch einen zentralen Laufstreifenabschnitt (25) getrennt sind;
- eine Gürtelverstärkung (30), radial innerhalb des Laufstreifens (20), die mindestens eine Schutzverstärkung (31) und eine Arbeitsverstärkung (32) umfasst, wobei die Verstärkungen jeweils aus Schutzlagen (311, 312) und aus Arbeitslagen (321, 322) gebildet sind, die metallische Festigkeitsträger umfassen, die in eine Elastomermischung eingebettet sind, wobei diese Lagen an ihren axialen Enden eine Randmischungslage (35, 37) aufweisen;
- eine Karkassenverstärkung (50), radial innerhalb der Gürtelverstärkung (30), die mindestens eine Karkassenlage umfasst, die aus metallischen Festigkeitsträgern (55) besteht, die in eine elektrisch leitfähige Einbettungselastomermischung eingebettet sind, wobei die metallischen Festigkeitsträger im Wesentlichen parallel zueinander sind und mit der Umfangsrichtung (XX') einen Winkel zwischen 85° und 95° bilden, wobei jede Karkassenlage einen Hauptteil (58) umfasst, der die beiden Wülste (60) untereinander verbindet und in jedem Wulst (60) um einen Wulstkern (64) umgeschlagen ist, um eine Wulstumlage (62) zu bilden;
- eine Karkasse/Gürtel-Kopplungslage (45), die aus einer Elastomermischung besteht, die elektrisch leitfähig ist und axial nach außen hin im Schulterbereich zwischen der Karkassenverstärkung (50) und der Gürtelverstärkung (30) angeordnet ist;
- zwei Seitenwände (80), welche die Laufstreifenausläufe (27, 28) mit den beiden Wülsten (60) verbinden, wobei die Wülste (60) eine Fersenlage (65) umfassen, die dazu bestimmt ist, mit einer Felge (70) in Kontakt zu gelangen;
**dadurch gekennzeichnet, dass** die Masse der Elastomermischungen aus nicht fossilen Ressourcen größer als oder gleich 65 % der Gesamtmasse der in dem Reifen enthaltenden Elastomermischungen ist, dass mindestens 75 % der Gesamtmasse der in dem Reifen enthaltenen Elastomermischungen aus Elastomermischungen besteht, die jeweils einen viskoelastischen Verlustfaktor tan(δ) kleiner als oder gleich 0,065 und einen spezifischen elektrischen Widerstand größer als oder gleich 1E+10 'Ω.cm aufweisen, dass eine Verbindungslage (40), die aus einer elektrisch leitfähigen Elastomermischung besteht, radial zwischen der Karkasse/Gürtel-Kopplungslage (45) und der Gürtelverstärkung (30) angeordnet ist und an ihrem axial äußeren Ende mit dem Laufstreifenauslauf (27) und an ihrem axial inneren Ende mit der Einbettungsmischung der Karkassenlage (57) in Kontakt ist, und dass der Laufstreifenauslauf (27), die Verbindungslage (40), die Einbettungsmischung der Karkassenlage (57) und die Fersenlage (65) einen bevorzugten leitfähigen Pfad für die elektrischen Ladungen zwischen dem Boden und der Felge (70) darstellen, wenn der Reifen auf seiner Felge (70) montiert ist und auf den Boden gedrückt wird.

2. Reifen (1) nach Anspruch 1, bei dem die Verbindungslage (40) an ihrem radial inneren Ende über eine Distanz LC1 von mindestens 10 mm mit dem Laufstreifenauslauf (27) in Kontakt ist und an ihrem axial inneren Ende über eine Distanz LC2 von mindestens 10 mm mit der Einbettungsmischung der Karkassenlage (57) in Kontakt ist.

3. Reifen (1) nach einem der Ansprüche 1 oder 2, bei dem die Dicke der Verbindungslage (40), gemessen entlang der zur Karkassenlage senkrechten Geraden, die durch die Mitte der Verbindungslage (40) verläuft, größer oder gleich 2 mm ist.

4. Reifen (1) nach einem der Ansprüche 1 bis 3, bei dem die Verbindungselastomermischung (40) eine Kautschukzusammensetzung aufweist auf Basis einer Polyisoprenmatrix aus Natur- oder Synthesekautschuk, eines Vernetzungssystems und eines verstärkenden Füllstoffs mit einem Gesamtanteil von höchstens 50 phr und mehrheitlich Ruß mit einem Anteil von mindestens 20 phr und höchstens 50 phr umfassend.

5. Reifen (1) nach einem der Ansprüche 1 bis 4, bei dem die Elastomermischung mindestens eines Laufstreifenauslaufs (27, 28) eine elektrisch leitfähige Kautschukzusammensetzung ist auf Basis mindestens von Polyisopren, eines Vernetzungssystems und mindestens eines verstärkenden Füllstoffs, der Ruß umfasst, der durch eine Oberfläche nach BET von mindestens 110 m2/g und durch einen Anteil von mindestens 30 phr und höchstens 80 phr gekennzeichnet ist.

6. Reifen (1) nach einem der Ansprüche 1 bis 5, bei dem die Elastomermischung des zentralen Abschnitts (25) des Laufstreifens (20) eine Kautschukzusammensetzung ist auf Basis mindestens eines Dienelastomers, eines Vernetzungssystems und eines verstärkenden Füllstoffs mit einem Gesamtanteil von höchstens 40 phr und Ruß und Kieselsäure umfassend.

7. Reifen (1) nach einem der Ansprüche 1 bis 6, bei dem die Randmischung (35) der Schutzlage (311, 312) eine Kautschukzusammensetzung aufweist auf Basis einer Polyisoprenmatrix aus Naturkautschuk, eines Vernetzungssystems und eines verstärkenden Füllstoffs mit einem Gesamtanteil von höchstens 50 phr und mehrheitlich Kieselsäure mit einem Anteil von mindestens 30 phr und höchstens 50 phr umfassend.

8. Reifen (1) nach einem der Ansprüche 1 bis 7, bei dem die Randelastomermischung (37) der Arbeitslagen (321, 322) die gleiche Zusammensetzung aufweist wie die Randelastomermischung (35) der Schutzlagen (311, 312).

9. Reifen (1) nach einem der Ansprüche 1 bis 8, bei dem die Mischung der Karkasse/Gürtel-Kopplungslage (45) eine Kautschukzusammensetzung aufweist auf Basis einer Polyisoprenmatrix aus Naturkautschuk, eines Vernetzungssystems und eines verstärkenden Füllstoffs mit einem Gesamtanteil von höchstens 55 phr und mehrheitlich Kieselsäure mit einem Anteil von mindestens 35 phr und höchstens 55 phr umfassend.

10. Reifen (1) nach einem der Ansprüche 1 bis 9, bei dem der Reifen eine Anti-Kriech-Verstärkungselastomermischung (90) umfasst, die axial und radial innerhalb der Einbettungsmischung der Karkassenlage (57) und außerhalb einer inneren Dichtungslage (95) angeordnet ist, und bei dem die Anti-Kriech-Verstärkungselastomermischung die gleiche Zusammensetzung aufweist wie die Elastomermischung zur mechanischen Kopplung der Karkassenverstärkung und der Gürtelverstärkung.

11. Reifen (1) nach einem der Ansprüche 1 bis 10, bei dem die Elastomermischung der Abdichtungslage (61) in dem Wulst (60), axial außerhalb der Wulstumlage (62) der Karkassenlage (57) und axial innerhalb der Seitenwandlage (80), die gleiche Zusammensetzung aufweist wie die Elastomermischung zur mechanischen Kopplung der Karkassenverstärkung und der Gürtelverstärkung.

12. Reifen (1) nach einem der Ansprüche 1 bis 11, bei dem die Elastomermischung jeder Seitenwand (80) eine Kautschukzusammensetzung aufweist auf Basis mindestens eines Verschnitts von Polyisopren aus Naturkautschuk und von Polybutadien, eines Vernetzungssystems und eines verstärkenden Füllstoffs mit einem Gesamtanteil von höchstens 45 phr und Ruß mit einem Anteil von höchstens 5 phr und, mehrheitlich, Kieselsäure mit einem Anteil von mindestens 20 phr und höchstens 40 phr umfassend.

13. Reifen (1) nach einem der Ansprüche 1 bis 12, bei dem die Elastomermischung des zentralen Laufstreifenabschnitts (25) einen viskoelastischen Verlustfaktor tan (δ) mit einem Wert von höchstens 0.065 aufweist.

14. Reifen (1) nach einem der Ansprüche 1 bis 13, bei dem die Elastomermischung jeder Seitenwand (80) einen viskoelastischen Verlustfaktor tan (δ) mit einem Wert von höchstens 0.12 aufweist.

15. Reifen (1) nach einem der Ansprüche 1 bis 14, bei dem die Elastomermischung der Karkasse/Gürtel-Kopplungslage (45) einen viskoelastischen Verlustfaktor tan (δ) mit einem Wert von höchstens 0.06 aufweist

## Claims

1. Tyre (1) for a heavy-duty vehicle of construction plant type, comprising:
- elastomer compounds derived from non-fossil and/or fossil resources, any elastomer compound having a viscoelastic loss tan(δ) defined as being the ratio of the viscous shear modulus G" to the elastic shear modulus G', these modulus values being measured in accordance with the standard ASTM D 5992-96, at a frequency of 10 Hz for a temperature of 100°C, and any electrically conducting elastomer compound being defined as having an electrical resistivity less than or equal to 1E+06 Ohm centimetres ('Ω.cm), measured in accordance with the standard ASTM-D257;
- a tread (20) having two axial end portions or tread wings (27, 28) that are axially separated by a central tread portion (25);
- a crown reinforcement (30), radially on the inside of the tread (20), comprising at least one protective reinforcement (31) and a working reinforcement (32), said reinforcements being formed respectively of protective layers (311, 212) and of working layers (321, 322) containing metal reinforcers coated with an elastomer compound, these layers at their axial ends having a layer of edging compound (35, 37);
- a carcass reinforcement (50), radially on the inside of the crown reinforcement (30), comprising at least one carcass layer made up of metal reinforcers (55) coated in an electrically conducting coating elastomer compound (57), said metal reinforcers being substantially mutually parallel and forming, with the circumferential direction (XX') an angle of between 85° and 95°, each carcass layer comprising a main part (58), connecting two beads (60) to one another and wrapped, within each bead (60), around a bead wire (64) to form a turn-up (62);
- a carcass-crown coupling layer (45) consisting of electrically conducting elastomer compound and inserted between the carcass reinforcement (50) and the crown reinforcement (30), axially towards the outside in the shoulder region;
- two sidewalls (80) connecting the tread wings (27, 28) to the two beads (60), said beads (60) comprising a bead chafer layer (65) intended to come into contact with a rim (70);
**characterized in that** the mass of the elastomer compounds derived from non-fossil resources is greater than or equal to 65% of the total mass of the elastomer compounds contained in the tyre, **in that** at least 75% of the total mass of the elastomer compounds contained in the tyre is made up of elastomer compounds each of which has a viscoelastic loss tan(δ) less than or equal to 0.065, and an electrical resistivity greater than or equal to 1E+10 'Ω.cm, **in that** a linking layer (40), made up of an electrically conducting elastomer compound is inserted radially between the carcass-crown coupling layer (45) and the crown reinforcement (30), and is in contact at its axially exterior end with the tread wing (27) and at its axially interior end with the carcass layer coating compound (57), **and in that** the tread wing (27), the linking layer (40), the carcass layer coating compound (57) and the bead chafer layer (65) constitute a conducting preferred pathway for conducting electrical charge between the ground and the rim (70) when the tyre is mounted on its rim (70) and compressed onto the ground.

2. Tyre (1) according to Claim 1, wherein the linking layer (40) is in contact with the tread wing (27) at its radially exterior end over a distance LC1 equal to at least 10 mm, and is in contact at its axially interior end with the carcass layer coating compound (57) over a distance LC2 equal to at least 10 mm.

3. Tyre (1) according to one of Claims 1 or 2, wherein the thickness of the linking layer (40), measured along the straight line normal to the carcass layer passing through the middle of said linking layer (40) is greater than or equal to 2 mm.

4. Tyre (1) according to any one of Claims 1 to 3, wherein the linking elastomer compound (40) has a rubber composition based on a matrix of polyisoprene natural or synthetic rubber, a crosslinking system, and a reinforcing filler at an overall content at most equal to 50 phr, and predominantly comprising carbon black at a content at least equal to 20 phr, and at most equal to 50 phr.

5. Tyre (1) according to any one of Claims 1 to 4, wherein the elastomer compound of at least one tread wing (27, 28) is an electrically conducting rubber composition based on at least polyiosprene, on a crosslinking system, and on at least one reinforcing filler comprising carbon black, **characterized by** a BET surface area at least equal to 110 m2/g and by a content at least equal to 30 phr and at most equal to 80 phr.

6. Tyre (1) according to any one of Claims 1 to 5, wherein the elastomer compound of the central portion (25) of the tread (20) is a rubber composition based on at least one diene elastomer, on a crosslinking system, and on a reinforcing filler at an overall content at most equal to 40 phr and comprising carbon black and silica.

7. Tyre (1) according to any one of Claims 1 to 6, wherein the edging compound (35) of the protective layer (311, 312) has a rubber composition based on a matrix of polyisoprene natural rubber, a crosslinking system, and a reinforcing filler at an overall content at most equal to 50 phr, and predominantly comprising silica at a content at least equal to 30 phr, and at most equal to 50 phr.

8. Tyre (1) according to any one of Claims 1 to 7, wherein the elastomer edging compound (37) of the working layers (321, 222) has the same composition as the elastomer edging compound (35) of the protective layers (311, 312).

9. Tyre (1) according to any one of Claims 1 to 8, wherein the compound of the carcass-crown coupling layer (45) has a rubber composition based on a matrix of polyisoprene natural rubber, a crosslinking system, and a reinforcing filler at an overall content at most equal to 55 phr, and predominantly comprising silica at a content at least equal to 35 phr, and at most equal to 55 phr.

10. Tyre (1) according to any one of Claims 1 to 9, wherein the tyre comprises an anti-creep reinforcing elastomer compound (90) positioned axially and radially on the inside of the carcass layer coating compound (57) and on the outside of an airtight inner-liner layer (95), and wherein the anti-creep reinforcing elastomer compound (90) has the same composition as the coupling elastomer compound mechanically coupling the carcass reinforcement and the crown reinforcement.

11. Tyre (1) according to any one of Claims 1 to 10, wherein the elastomer compound of the filler layer (61) in the bead (60), axially on the outside of the turn-up (62) of the carcass layer (57), and axially on the inside of the sidewall layer (80), has the same composition as the coupling elastomer compound mechanically coupling the carcass reinforcement and the crown reinforcement.

12. Tyre (1) according to any one of Claims 1 to 11, wherein the elastomer compound of each sidewall (80) has a rubber composition based on at least one blend of polyisoprene natural rubber and polybutadiene, on a crosslinking system, and on a reinforcing filler, at an overall content at most equal to 45 phr, and comprising carbon black, at a content at most equal to 5 phr, and, predominantly, silica, at a content at least equal to 20 phr and at most equal to 40 phr.

13. Tyre (1) according to any one of Claims 1 to 12, wherein the elastomer compound of the tread central portion (25) has a viscoelastic loss tan(δ) with a value at most equal to 0.065.

14. Tyre (1) according to any one of Claims 1 to 13, wherein the elastomer compound of each sidewall (80) has a viscoelastic loss tan (δ) with a value at most equal to 0.12.

15. Tyre (1) according to any one of Claims 1 to 14, wherein the elastomer compound of the carcass-crown coupling layer (45) has a viscoelastic loss tan(δ) with a value at most equal to 0.06.
